# EUROPEAN PATENT SPECIFICATION

(11) **EP 3 276 496 B1**
(45) Date of publication and mention of the grant of the patent: **14.08.2019**
(21) Application number: 15886351.4
(22) Date of filing: 25.03.2015
(51) Int. Cl.: G06F 13/00, H04L 12/28, H04L 29/08, H04L 29/06

(54) **COMMUNICATION SYSTEM, FACILITY MANAGEMENT DEVICE, COMMUNICATION METHOD, AND PROGRAM**
KOMMUNIKATIONSSYSTEM, ANLAGENVERWALTUNGSVORRICHTUNG, KOMMUNIKATIONSVERFAHREN UND PROGRAMM
SYSTÈME DE COMMUNICATIONS, DISPOSITIF DE GESTION D'INSTALLATIONS, PROCÉDÉ DE COMMUNICATION, ET PROGRAMME

(43) Date of publication of application: 31.01.2018
(73) Proprietor: Mitsubishi Electric Corporation, Chiyoda-ku Tokyo 100-8310 (JP)
(72) Inventor: ITO Takahiro, Tokyo 100-8310 (JP); ISHIZAKA Taichi, Tokyo 1008310 (JP); KUROIWA Takeru, Tokyo 100-8310 (JP); KOMIYA Noriyuki, Tokyo 100-8310 (JP)
(74) Representative: Studio Torta S.p.A.
(86) International application number: PCT/JP2015/059111
(87) International publication number: WO 2016/151798

(56) References cited:
- EP-A1- 2 797 265
- WO-A1-2009/063555
- WO-A1-2014/068632
- JP-A- 2000 224 167
- JP-A- 2002 314 538
- JP-A- 2003 030 072
- I. Fette ET AL: "RFC 6455 - The WebSocket Protocol", , 1 December 2011 (2011-12-01), XP055358745, Retrieved from the Internet: URL:https://tools.ietf.org/html/rfc6455 [retrieved on 2017-03-24]

## Description

### Technical Field

The present disclosure relates to a communication system, a facility management device, a communication method, and a program.

### Background Art

A facility management system for performing integrated management of facility devices is known in which by connecting, to an intranet, a monitoring device and at least one facility management device that manages the facility devices, such as air conditioners installed in a building, the monitoring device collects management information from the facility management device.

In using this type of facility management system, countermeasures are important for prevention of damage, such as leakages of management information caused by, for example, a port scan improperly accessing non-public services provided by the facility management device. Various types of countermeasures are conventionally proposed.

For example, Patent Literature 1 discloses a network system in which a management device connected to an external network and a communication target device connected to an internal network are connected via a firewall. In this network system, the communication target device periodically transmits to the management device a request that is in conformance with a specified communication protocol, such as HTTP. In response to this request, the management device transmits to the communication target device a response indicating a data request or a response indicating there is no data request. Then upon receiving the response indicating the data request, the communication target device appends data relating to the data request to a request that is in conformance with the specified communication protocol, and transmits the data appended to the request.

### Citation List

### Patent Literature

Patent Literature 1: Japanese Patent No. 4104799
Patent Literature 2 : EP 2 797 265
Patent Literature 3 : Fette et al. « RFC 6455 - The webSocket protocol », 1 December 2011, XP055358745
Patent Literature 4 : WO 2009/063555
Patent Literature 5: JP 2002 31 4538
Patent Literature 6: JP 2003 030072

### Summary of Invention

### Technical Problem

However, a communication sequence in which a request is periodically transmitted to the management device from the communication target device, as in the technique disclosed in Patent Literature 1, has problems in that time lag and traffic may increase, and responding to specification changes is difficult due to restriction of the specified communication protocol such as HTTP.

The present disclosure has been made to solve the above-described problems, and an objective of the present disclosure is to provide a communication system and the like that, while preventing improper access to services provided by a monitoring target device, avoids time lag and traffic increases in communication between the monitoring device and the monitoring target device, and additionally makes the responding to specification changes easy.

### Solution to Problem

The invention is defined in the indepedent claims 1, 3, 4 and 5.

### Advantageous Effects of Invention

According to the present disclosure, while preventing improper access to services provided by the second device (monitoring target device), time lag and traffic increases in the communication between the first device (monitoring device) and the second device are avoided, and additionally the responding to specification changes is made easy.

### Brief Description of Drawings

FIG. 1 is a drawing illustrating an overall configuration of a facility management system including a communication system according to an embodiment of the present disclosure;
FIG. 2 is a block diagram illustrating a hardware configuration of a monitoring device;
FIG. 3 is a block diagram illustrating a functional configuration of the monitoring device;
FIG. 4 is a drawing illustrating an example of a message body indicating a request content;
FIG. 5 is a drawing illustrating an example of a message body indicating a response content;
FIG. 6 is a drawing illustrating an example of a request command;
FIG. 7 is a block diagram illustrating a hardware configuration of a facility management device;
FIG. 8 is a block diagram illustrating a functional configuration of the facility management device;
FIG. 9 is a drawing illustrating an example of a post-conversion frame;
FIG. 10 is a drawing illustrating an example of a default message header;
FIG. 11 is a drawing illustrating an example of a message body indicating a communication content;
FIG. 12 is a flowchart illustrating a procedure of frame conversion processing; and
FIG. 13 is a drawing illustrating a communication sequence between the monitoring device and the facility management device.

### Description of Embodiments

Embodiments of the present disclosure are described below in detail with reference to the drawings.

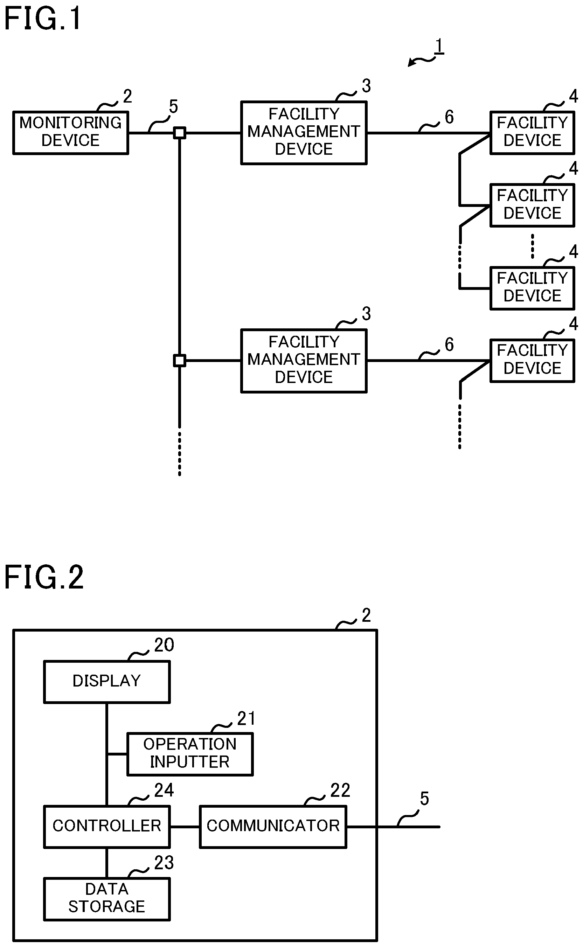

FIG. 1 is a drawing illustrating an overall configuration of a facility management system 1 including a communication system according to an embodiment of the present disclosure. The facility management system 1, for example, is installed within an office building, and as illustrated in FIG. 1, includes a monitoring device 2, facility management devices 3, and facility devices 4.

The monitoring device 2 and each facility management device 3 are communicably connected via a network 5 such as an intranet. The communication system according to the present embodiment of the present disclosure includes the monitoring device 2 and at least one facility management device 3. Each facility management device 3 is communicably connected to at least one facility device 4 via a network 6. The network 6 is a network based on specifications of a widely-known facility device network.

The facility device 4 includes, for example an air conditioner, a lighting apparatus, a water heater, or the like, and the facility device 4 operates under control of the facility management device 3.

The monitoring device 2 (first device) is a device that collects management information from each of the facility management devices 3, and displays and provides to a user a screen (abnormality notification, warning, various types of graphs, or the like) based on the collected management information. As illustrated in FIG. 2, the monitoring device 2 includes a display 20 for displaying information, an operation inputter 21 for inputting of a user operation, a communicator 22 for communicating with each facility management device 3, a data storage 23 for storing various types of programs and data, and a controller 24 that controls these components.

The display 20 includes, for example, a display device such as a CRT display, a liquid crystal display, an organic EL display, a plasma display, or the like. Under control of the controller 24, the display 20 displays the screen or the like based on the management information collected from each of the facility management devices 3.

The operation inputter 21 may be a keyboard, a mouse, a keypad, a touchpad, a touch panel, and/or the like, and the operation inputter 21 inputs the user operation, and outputs to the controller 24 a signal based on the input user operation.

The communicator 22 (first communicator) includes a communication interface such as a network card, and under control of the controller 24, performs communication via the network 5 with each of the facility management devices 3 in conformance with the predetermined communication protocol (first protocol). In the present embodiment, the communicator 22 performs communication in conformance with WebSocket protocol.

The data storage 23 may be a hard disk drive, a readable and writable non-volatile semiconductor memory such as a flash memory, or the like. The data storage 23 stores programs and data for communication with each of the facility management devices 3, and stores programs and data for processing of the collected management information and for display of a screen indicating the processing results.

The controller 24 includes a central processing unit (CPU), a read only memory (ROM), a random access memory (RAM), and the like, none of which are illustrated, and performs overall control of the monitoring device 2.

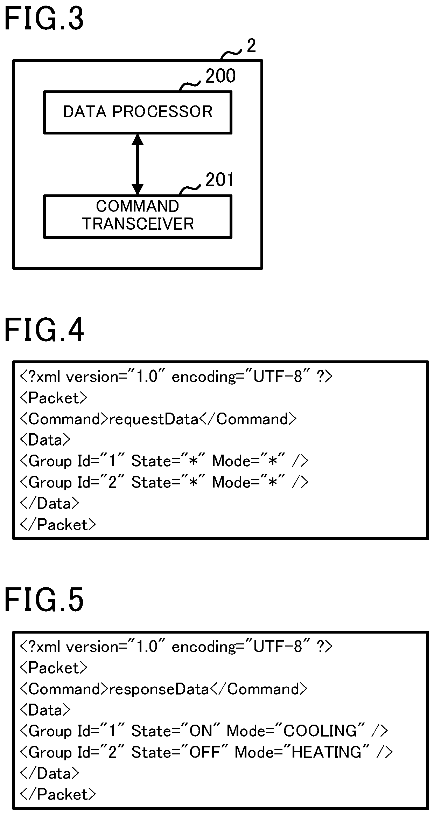

FIG. 3 is a block diagram illustrating a functional configuration of the monitoring device 2. A data processor 200, periodically or in response to a user command, requests one or more facility management devices 3 each to provide a service. Here, a "provision of a service" is taken to mean performing processing executed by a service-providing function (described in detail below) with which the facility management device 3 is equipped. The service-providing function includes, for example, transmitting of the requested management information, such as an operation state, an operation mode, or power consumption of the facility device 4 that is the target of management.

For example, when requesting the facility management device 3 to transmit the management information, the data processor 200 generates the request data and supplies the generated request data to the command transceiver 201. In this case, specifically, the data processor 200 generates as the request data the message body indicating the request content as illustrated in FIG. 4, and supplies the generated request data to the command transceiver 201. A request for a state (operation state) and a mode (operation mode) is written in the example of the message body of FIG. 4.

Further, upon receiving from the command transceiver 201 response data (see FIG. 5) from the facility management device 3, the data processor 200, for example, processes the response data and causes the display 20 to display the result of processing.

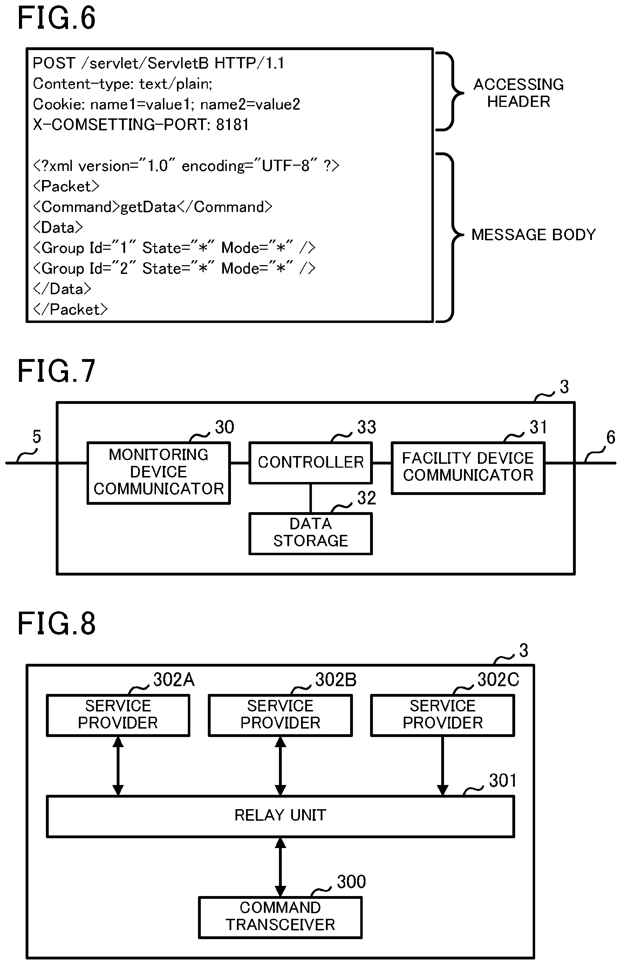

When the command transceiver 201 receives the message body from the data processor 200, the command transceiver 201 appends an accessing header (first header) to this message body to generate the request command (see FIG. 6). At this time, the command transceiver 201 enters two line feeds between the accessing header and the message body.

The "accessing header" is taken to mean parameters for receiving a service from the facility management device 3. In other words, the "accessing header" is data in which parameters are set, the parameters being for accessing the service-providing function of the facility management device 3. As described in detail below, the service-providing function of the facility management device 3 provides the service in conformance with the second protocol (HTTP in the present embodiment) that is different from the first protocol (WebSocket protocol in the present embodiment). For example, the line beginning with "POST" or "GET" in the accessing header is the field indicating a request, the line beginning with "X-COMSETTING-" is the field indicating a communication setting such as a port, and the other lines are fields indicating designations of HTTP headers.

The command transceiver 201 transmits the generated request command via the communicator 22 to the facility management device 3 designated by the data processor 200. Further, upon receiving via the communicator 22 the response command or notification command from the facility management device 3, the command transceiver 201 extracts from the received response command or the like the message body indicating the response content (as illustrated in FIG. 5), that is, extracts the response data, and supplies the extracted response data to the data processor 200.

The facility management device 3 is described next. As illustrated in FIG. 7, the facility management device 3 (second device) includes a monitoring device communicator 30 for communicating with the monitoring device 2, a facility device communicator 31 for communicating with each of the facility devices 4, a data storage 32 for storing various types of programs and data, and a controller 33 that controls these components.

The monitoring device communicator 30 (second communicator) includes a communication interface such as a network card, and under control of the controller 33, performs communication via the network 5 with the monitoring device 2 in conformance with the predetermined communication protocol (first protocol). In the present embodiment, the monitoring device communicator 30 performs communication in conformance with WebSocket protocol.

The facility device communicator 31 includes a communication interface such as a network card, and under control of the controller 33, performs communication via the network 6 with each of the facility devices 4 based on specifications of a widely-known facility device network.

The data storage 32 may be a hard disk drive, a readable and writable non-volatile semiconductor memory such as a flash memory, or the like. The data storage 32 stores a program and data for management of operation state or the like of each facility device 4, and stores a program and data for performing the service-providing function.

The controller 33 includes a CPU, a ROM, a RAM, and the like, none of which are illustrated, and performs overall control of the facility management device 3.

FIG. 8 is a block diagram illustrating a functional configuration of the facility management device 3. Upon receiving the request command from the monitoring device 2 via the monitoring device communicator 30, the command transceiver 300 supplies the received request command to a relay unit 301. Further, the command transceiver 300 transmits to the monitoring device 2 via the monitoring device communicator 30 the response command or notification command supplied from the relay unit 301.

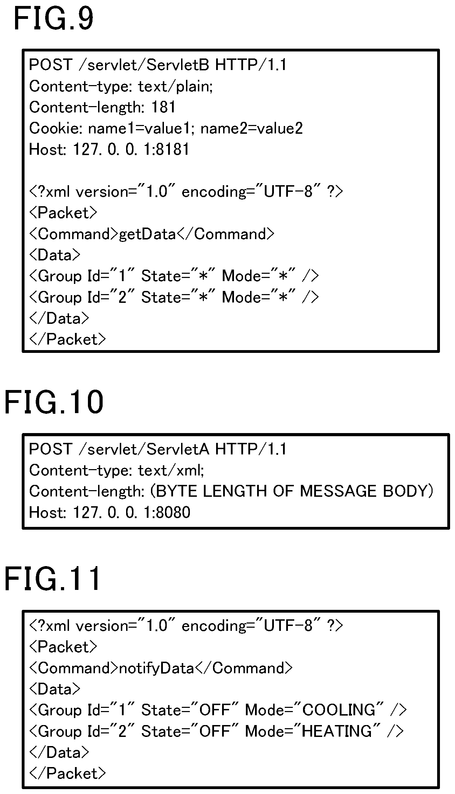

Upon receiving the request command from the command transceiver 300, the relay unit 301 determines, based on the accessing header included in the request command, the service-providing function (service provider 302A or 302B) to be accessed, and converts the request command to the frame (see FIG. 9) that is in conformance with the second protocol (HTTP in the present embodiment) that is different from the first protocol (WebSocket protocol). During the conversion, as described in detail below, the relay unit 301 uses a default message header (default header) illustrated in FIG. 10.

Then the relay unit 301 supplies the generated frame to the service provider 302 (service provider 302A or 302B) of the determined access destination. Further, the relay unit 301 supplies to the command transceiver 300 the response command supplied from the service provider 302A or 302B, or the notification command supplied from service provider 302C.

The service providers 302A to 302C perform the service-providing function in the facility management device 3. The service provider 302A or 302B provides the service by sending and receiving data that is in conformance with the second protocol (HTTP in the present embodiment). More specifically, depending on content of the request data (message body) that is included in the above-described frame supplied from the relay unit 301, the service provider 302A or 302B generates the respond data, that is, data including the management information such as the requested operation state, operation mode, or the like (see FIG. 5). Then the service provider 302A or 302B supplies to the relay unit 301 the response command that contains the generated response data and is in conformance with HTTP.

In the case of a change in the operation state or the like of the facility device 4 that is the target of management, the service provider 302C autonomously sends notification of the existence of the change to the monitoring device 2. Specifically, when there is a change in the operation state or the like, the service provider 302C generates the notification data (see FIG. 11) indicating the change of state, and supplies to the relay unit 301 a command (notification command) containing the generated notification data. The service provider 302C generates the notification command in conformance with a predetermined protocol, such as User Datagram Protocol (UDP).

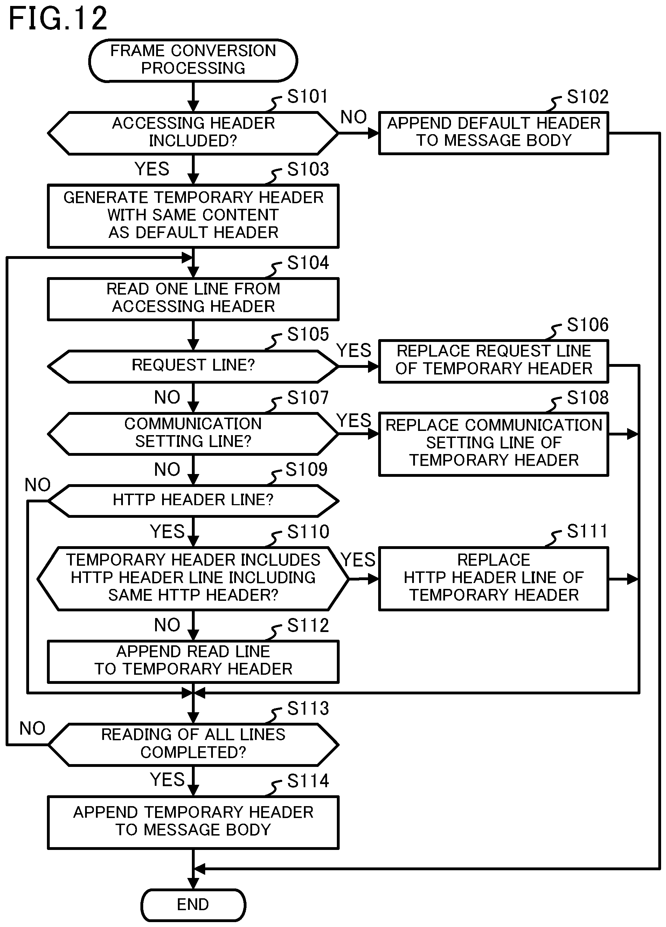

FIG. 12 is a flowchart illustrating a procedure of frame conversion processing executed by the relay unit 301. Upon the supplying of the request command from the command transceiver 300, this frame conversion processing starts.

Firstly, the relay unit 301 determines whether the accessing header is included in the request command supplied from the command transceiver 300 (step S101). When the accessing header is not included (NO in step S101), the relay unit 301 appends the default header (see FIG. 10) to the message body extracted from the request command (step S102). The request command from the monitoring device 2 in this manner is converted to the frame that is in conformance with the second protocol, that is, HTTP, and the frame conversion processing ends.

Conversely, when the accessing header is included (YES in step S101), the relay unit 301 copies the default header to generate a header (temporary header) of the same content (step S103). Thereafter, the relay unit 301 reads, in order from the first line, one line of the accessing header each time (step S104).

When the read line is the field indicating a request (YES in step S105), the relay unit 301 replaces the request line (field indicating the request) included in the temporary header with the read line (step S106). Thereafter, the relay unit 301 performs the processing of step S113.

When the read line is the field indicating the communication setting (YES in step S107), the relay unit 301 replaces the communication setting line (field indicating the communication setting) included in the temporary header with the read line (step S108). Thereafter, the relay unit 301 performs the processing of step S113.

When the read line is not the field indicating the request and is not the field indicating communication setting (NO in step S105 and NO in step S107), the relay unit 301 determines whether the read line is a field indicating the designation of the HTTP header (step S109).

When the read line is not the field indicating the designation of the HTTP header (NO in step S109), the relay unit 301 performs the processing of step S113.

Conversely, when the read line is the field indicating the designation of the HTTP header (YES in step S109), the relay unit 301 determines whether the temporary header includes an HTTP header line (field indicating designation of the HTTP header) including the same HTTP header as the HTTP header included in the read line (step S110).

When the temporary header includes the HTTP line equivalent to the above (YES in step S110), the relay unit 301 replaces the HTTP header line of the temporary header with the read line (step S111). Thereafter, the relay unit 301 performs the processing of step S113.

Conversely, when the temporary header does not include an HTTP header line equivalent to the above (NO in step S110), the relay unit 301 appends the read line to the temporary header (step S112), and performs the processing of step S113.

In step S113, the relay unit 301 determines whether the reading of all the lines from the accessing header is completed (step S113). When the reading of all the lines is not completed (NO in step S113), the processing of the relay unit 301 returns to step S104.

Conversely, when the reading of all the lines is completed (YES in step S113), the relay unit 301 appends the temporary header to the message body extracted from the request command (step S114). By this means, the request command from the monitoring device 2 is converted to the frame that is in conformance with the second protocol, that is, HTTP (see FIG. 9), and the frame conversion processing ends.

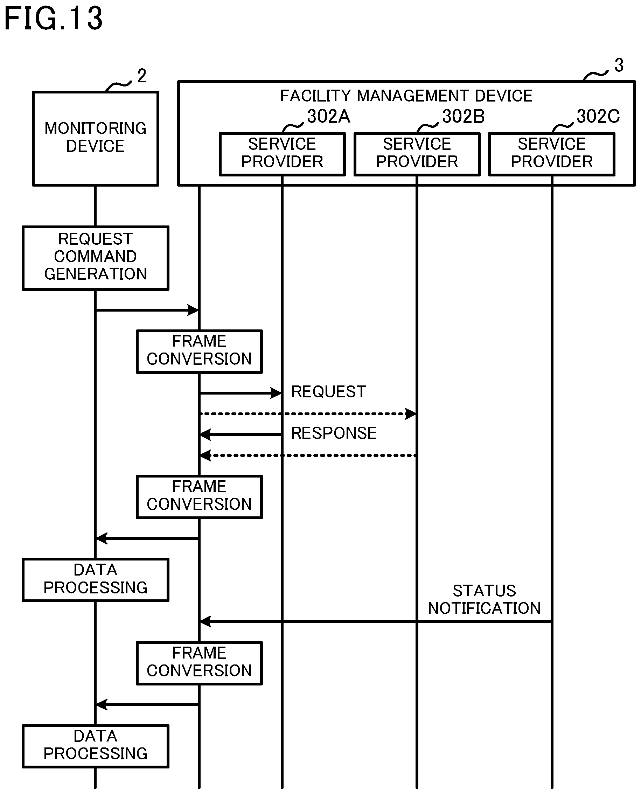

FIG. 13 illustrates the communication sequence between the monitoring device 2 and the facility management device 3.

As described above, in the communication system according to the embodiment of the present disclosure, in order to access the service-providing function (service provider 302A or 302B) of the facility management device 3, the monitoring device 2 is required to perform access through the relay unit 301 included in the facility management device 3. Then the relay unit 301 generates the frame for accessing the service-providing function. By this means, for example, access from the outside by use of a previously known protocol, such as HTTP is not possible, and improper access to the service-providing function of the facility management device 3 by port scanning can be prevented.

Further, since periodical transmission of the request from the facility management device 3 to the monitoring device 2 as in the conventional manner is not required, time lag and traffic increases may be avoided.

Further, appropriate changing the parameters set in the accessing header generated by the monitoring device 2 facilitates the handling of specification changes and addition of request services.

Further, the communication between the monitoring device 2 and the facility management device 3 is performed in conformance with WebSocket protocol. Thus after the handshake, communication can be in the continuous connection state, and when communication is required, the transmission can be initiated by either the monitoring device 2 or the facility management device 3. Thus the monitoring device 2 can immediately receive the service from the facility management device 3. Further, the communication is in conformance with WebSocket protocol, and this enables access to the service-providing function from a web browser.

The present disclosure is not limited to the above embodiments, and naturally various types of modifications are possible within a scope allowed by the gist of the present disclosure.

For example, the service-providing function of the facility management device 3 is not limited to the transmission of the management information and the notification of the change of state as described above. For example, the facility management device 3 may update retained management information by an instruction from the monitoring device 2.

In the above-described embodiments, although the service providers 302A and 302B included in the facility management device 3 provide services in conformance with HTTP, services may be provided using another communication protocol. In this case, in the monitoring device 2, the command transceiver 201 generates the request command by appending the accessing header (first header) used for the other communication protocol to the message body supplied from the data processor 200.

The programs executed by the monitoring device 2 and the facility management device 3 in the above-described embodiments may be stored and distributed in a computer-readable recording medium such as a compact disk read-only memory (CD-ROM), a digital versatile disc (DVD), a magneto-optical disk (MO), a universal serial bus (USB) memory and a memory card. By installation of this program in a dedicated or general-purpose computer, the computer can function as the monitoring device 2 or the facility management device 3 of the above-described embodiments.

The above-described program may be stored on a disk device or the like of a server device on a communication network such as the Internet to enable the program to be downloaded to the computer, for example by superimposing the program onto a carrier wave. Moreover, the above-described processing can be achieved even by execution while the program is transferred through the communication network. Furthermore, the above-described processing can be achieved by executing all or part of the program on the server device, and executing the program while sending and receiving by the computer the information relating to such processing through the communication network.

Moreover, if the above-described functions are executed by sharing the functions between an operating system (OS) and application programs, or are executed by both the OS and the application programs in cooperation with each other, the non-OS portion alone may be stored and distributed in the above-described recording medium, or alternatively, may be, for example, downloaded to the computer.

The foregoing describes some example embodiments for explanatory purposes. Accordingly, the specification and drawings are to be regarded in an illustrative rather than a restrictive sense This detailed description therefore is not to be taken in a limiting sense, and the scope of the invention is defined only by the included claims.

### Industrial Applicability

The present disclosure can be used with advantage for a facility management system for management of a facility device installed in a building or the like.

### Reference Signs List

- 1: Facility management system
- 2: Monitoring device
- 3: Facility management device
- 4: Facility device
- 5, 6: Network
- 20: Display
- 21: Operation inputter
- 22: Communicator
- 23, 32: Data storage
- 24, 33: Controller
- 30: Monitoring device communicator
- 31: Facility device communicator
- 200: Data processor
- 201, 300: Command transceiver
- 301: Relay unit
- 302A, 302B, 302C: Service provider

## Claims

1. A communication system (1) comprising:
a first device being a monitoring device (2); and
a second device being a facility management device (3) configured to provide a predetermined service to the first device (2),
wherein
the first device (2) comprises:
a first communicator (22) configured to communicate, in conformance with a first protocol, with the second device (3); and
a command transmitter (201) configured to, when the first device (2) requests the second device (3) to provide the service, transmit a request command to the second device (3) via the first communicator (22), the request command including (i) a first header comprising parameters for receiving the service and (ii) a message body indicating a request content, and
the second device (3) comprises:
a second communicator (30) configured to communicate, in conformance with the first protocol, with the first device (2);
a service provider (302A, 302B) configured to provide, in conformance with a second protocol, the service, the second protocol being different from the first protocol; and
a relay unit (301) configured to, upon the second communicator (30) receiving the request command, convert, based on a predetermined message header and the first header of the request command, the request command to a frame that is in conformance with the second protocol, and supply the frame to the service provider (302A, 302B), and
**characterized in that** the relay unit (301) is configured to copy the predetermined message header to generate a temporary header, and
to read every line in order from the first line of the first header, updates content of the temporary header based on content of the read lines, and appends the updated temporary header to the message body extracted from the request command to convert the request command to the frame.

2. The communication system (1) according to claim 1, wherein a communication between the first device (2) and the second device (3) is performed in conformance with WebSocket protocol.

3. A facility management device (3) for managing operation of at least one facility device (4) and providing a predetermined service to a monitoring device (2), the facility management device (3) comprising:
a communicator (30) configured to communicate, in conformance with a first protocol, with the monitoring device (2);
a service provider (302A, 302B) configured to provide, in conformance with a second protocol, the service, the second protocol being different from the first protocol; and
a relay unit (301) configured to, upon the communicator (30) receiving a request command from the monitoring device (2), convert, based on a predetermined message header and a header included in the request command and comprising parameters for receiving the service, the request command to a frame that is in conformance with the second protocol, and supply the frame to the service provider (302A, 302B), wherein
**characterized in that** the relay unit (301)
copies the predetermined message header to generate a temporary header, and
reads every line in order from the first line of the header, updates content of the temporary header based on content of the read lines, and appends the updated temporary header to a message body extracted from the request command to convert the request command to the frame.

4. A communication method comprising:
when a first device being a monitoring device (2) requests a second device being a facility management device (3) to provide a predetermined service, transmitting, in conformance with a first protocol, a request command to the second device (3), the request command including (i) a first header comprising parameters for receiving the service and (ii) a message body indicating a request content; and
upon the second device (3) receiving the request command, converting, based on a predetermined message header and the first header of the request command, the request command to a frame that is in conformance with a second protocol, and executing processing for providing the service based on the converted frame, the second protocol being different from the first protocol, **characterized in that** the second device (3)
copies the predetermined message header to generate a temporary header, and
reads every line in order from the first line of the first header, updates content of the temporary header based on content of the read lines, and appends the updated temporary header to the message body extracted from the request command to convert the request command to the frame.

5. A program for causing, when executed, a computer for managing operation of at least one facility device (4) and providing a predetermined service to a monitoring device (2) to function as:
a communicator (30) configured to communicate, in conformance with a first protocol, with the monitoring device (2);
a service provider (302A, 302B) configured to provide, in conformance with a second protocol, the service, the second protocol being different from the first protocol; and
a relay unit (301) configured to, upon the communicator (30) receiving a request command from the monitoring device (2), convert, based on a predetermined message header and a header included in the request command and comprising parameters for receiving the service, the request command to a frame that is in conformance with the second protocol, and supply the frame to the service provider (302A, 302B), **characterized in that** the program causes the relay unit (301) to copy the predetermined message header to generate a temporary header, and to read every line in order from the first line of the header, updates content of the temporary header based on content of the read lines, and appends the updated temporary header to a message body extracted from the request command to convert the request command to the frame.

## Patentansprüche

1. Kommunikationssystem (1), umfassend:
eine erste Vorrichtung, die eine Überwachungsvorrichtung (2) ist; und
eine zweite Vorrichtung, die eine Facility-Management-Vorrichtung (3) ist, die konfiguriert ist, der ersten Vorrichtung (2) einen vorbestimmten Dienst bereitzustellen,
wobei
die erste Vorrichtung (2) umfasst:
einen ersten Kommunikator (22), der konfiguriert ist, in Übereinstimmung mit einem ersten Protokoll mit der zweiten Vorrichtung (3) zu kommunizieren; und
einen Befehlssender (201), der konfiguriert ist, wenn die erste Vorrichtung (2) die zweite Vorrichtung (3) auffordert, den Dienst bereitzustellen, einen Anforderungsbefehl über den ersten Kommunikator (22) an die zweite Vorrichtung (3) zu senden, wobei der Anforderungsbefehl (i) einen ersten Header, der Parameter zum Empfangen des Dienstes umfasst, und ii) einen
Nachrichtenkörper enthält, der einen Anforderungsinhalt angibt, und
wobei die zweite Vorrichtung (3) umfasst:
einen zweiten Kommunikator (30), der konfiguriert ist, in Übereinstimmung mit dem ersten Protokoll mit der ersten Vorrichtung (2) zu kommunizieren;
einen Dienstanbieter (302A, 302B), der konfiguriert ist, in Übereinstimmung mit einem zweiten Protokoll den Dienst bereitzustellen, wobei sich das zweite Protokoll von dem ersten Protokoll unterscheidet; und
eine Relaiseinheit (301), die konfiguriert ist, wenn der zweite Kommunikator (30) den Anforderungsbefehl empfängt, basierend auf einem vorbestimmten Nachrichten-Header und dem ersten Header des Anforderungsbefehls den Anforderungsbefehl in einen Frame bzw. Rahmen zu konvertieren, der mit dem zweiten Protokoll übereinstimmt, und den Frame dem Dienstanbieter
(302A, 302B) bereitzustellen, und
**dadurch gekennzeichnet, dass** die Relaiseinheit (301) konfiguriert ist,
den vorbestimmten Nachrichten-Header zu kopieren, um einen temporären Header zu generieren, und
jede Zeile in der Reihenfolge von der ersten Zeile des ersten Headers zu lesen, den Inhalt des temporären Headers basierend auf dem Inhalt der gelesenen Zeilen aktualisiert und den aktualisierten temporären Header an den aus dem Anforderungsbefehl extrahierten Nachrichtenkörper anfügt, um den Anforderungsbefehl in den Frame zu konvertieren.

2. Kommunikationssystem (1) nach Anspruch 1, wobei eine Kommunikation zwischen der ersten Vorrichtung (2) und der zweiten Vorrichtung (3) in Übereinstimmung mit dem WebSocket-Protokoll durchgeführt wird.

3. Facility-Management-Vorrichtung (3) zum Verwalten des Betriebs von zumindest einer Facility-Vorrichtung (4) und Bereitstellen eines vorbestimmten Dienstes für eine Überwachungsvorrichtung (2), wobei die Facility-Management-Vorrichtung (3) umfasst:
einen Kommunikator (30), der konfiguriert ist, in Übereinstimmung mit einem ersten Protokoll mit der Überwachungsvorrichtung (2) zu kommunizieren;
einen Dienstanbieter (302A, 302B), der konfiguriert ist, in Übereinstimmung mit einem zweiten Protokoll den Dienst bereitzustellen, wobei sich das zweite Protokoll von dem ersten Protokoll unterscheidet; und
eine Relaiseinheit (301), die konfiguriert ist, wenn der Kommunikator (30) einen Anforderungsbefehl von der Überwachungsvorrichtung (2) empfängt, basierend auf einem vorbestimmten Nachrichten-Header und einem Header, der in dem Anforderungsbefehl enthalten ist und Parameter zum Empfangen des Dienstes umfasst, den Anforderungsbefehl in einen Frame bzw. Rahmen zu konvertieren, der mit dem zweiten Protokoll übereinstimmt, und den Frame dem Dienstanbieter (302A, 302B) bereitzustellen, wobei
**dadurch gekennzeichnet, dass** die Relaiseinheit (301)
den vorbestimmten Nachrichten-Header kopiert, um einen temporären Header zu generieren, und
jede Zeile in der Reihenfolge von der ersten Zeile des ersten Headers liest, den Inhalt des temporären Headers basierend auf dem Inhalt der gelesenen Zeilen aktualisiert und den aktualisierten temporären Header an einen aus dem Anforderungsbefehl extrahierten Nachrichtenkörper anfügt, um den Anforderungsbefehl in den Frame zu konvertieren.

4. Kommunikationsverfahren, umfassend:
wenn eine erste Vorrichtung, die eine Überwachungsvorrichtung (2) ist, eine zweite Vorrichtung, die eine Facility-Management-Vorrichtung (3) ist, auffordert, einen vorbestimmten Dienst bereitzustellen, Übertragen, in Übereinstimmung mit einem ersten Protokoll, eines Anforderungsbefehls an die zweite Vorrichtung (3), wobei der Anforderungsbefehl (i) einen ersten Header, der Parameter zum Empfangen des Dienstes umfasst, und ii) einen Nachrichtenkörper enthält, der einen Anforderungsinhalt angibt; und
wenn die zweite Vorrichtung (3) den Anforderungsbefehl empfängt, Konvertieren, basierend auf einem vorbestimmten Nachrichten-Header und dem ersten Header des Anforderungsbefehls, des Anforderungsbefehls in einen Frame bzw. Rahmen, der mit dem zweiten Protokoll übereinstimmt, und Ausführen einer Verarbeitung zum Bereitstellen des Dienstes basierend auf dem konvertierten Frame, wobei sich das zweite Protokoll von dem ersten Protokoll unterscheidet,
**dadurch gekennzeichnet, dass** die zweite Vorrichtung (3) den vorbestimmten Nachrichten-Header kopiert, um einen temporären Header zu generieren, und
jede Zeile in der Reihenfolge von der ersten Zeile des ersten Headers liest, den Inhalt des temporären Headers basierend auf dem Inhalt der gelesenen Zeilen aktualisiert und den aktualisierten temporären Header an einen aus dem Anforderungsbefehl extrahierten Nachrichtenkörper anfügt, um den Anforderungsbefehl in den Frame zu konvertieren.

5. Programm zum Veranlassen, wenn es ausgeführt wird, eines Computers, den Betrieb zumindest einer Facility-Vorrichtung (4) zu verwalten und einen vorbestimmten Dienst an eine Überwachungsvorrichtung (2) bereitzustellen, um zu fungieren als:
ein Kommunikator (30), der konfiguriert ist, in Übereinstimmung mit einem ersten Protokoll mit der Überwachungsvorrichtung (2) zu kommunizieren;
ein Dienstanbieter (302A, 302B), der konfiguriert ist, in Übereinstimmung mit einem zweiten Protokoll den Dienst bereitzustellen, wobei sich das zweite Protokoll von dem ersten Protokoll unterscheidet; und
eine Relaiseinheit (301), die konfiguriert ist, wenn der Kommunikator (30) einen Anforderungsbefehl von der Überwachungsvorrichtung (2) empfängt, basierend auf einem vorbestimmten Nachrichten-Header und einem Header, der in dem Anforderungsbefehl enthalten ist und Parameter zum Empfangen des Dienstes umfasst, den Anforderungsbefehl in einen Frame bzw. Rahmen zu konvertieren, der mit dem zweiten Protokoll übereinstimmt, und den Frame dem Dienstanbieter (302A, 302B) bereitzustellen,
**dadurch gekennzeichnet, dass** das Programm die Relaiseinheit (301) veranlasst,
den vorbestimmten Nachrichten-Header zu kopieren, um einen temporären Header zu generieren, und
jede Zeile in der Reihenfolge von der ersten Zeile des ersten Headers zu lesen, den Inhalt des temporären Headers basierend auf dem Inhalt der gelesenen Zeilen aktualisiert und den aktualisierten temporären Header an den aus dem Anforderungsbefehl extrahierten Nachrichtenkörper anfügt, um den Anforderungsbefehl in den Frame zu konvertieren.

## Revendications

1. Système de communication (1) comprenant :
un premier dispositif qui est un dispositif de surveillance (2) ; et
un second dispositif qui est un dispositif de gestion d'installations (3) conçu pour fournir un service prédéterminé au premier dispositif (2),
dans lequel :
le premier dispositif (2) comprend :
un premier dispositif de communication (22) conçu pour communiquer, en conformité avec un premier protocole, avec le second dispositif (3) ; et
un émetteur de commande (201) conçu pour, lorsque le premier dispositif (2) demande au second dispositif (3) de fournir le service, transmettre une commande de demande au second dispositif (3) par le biais du premier dispositif de communication (22), la commande de demande incluant (i) un premier en-tête comprenant des paramètres pour recevoir le service et (ii) un corps de message indiquant un contenu de demande, et
le second dispositif (3) comprend :
un second dispositif de communication (30) conçu pour communiquer, en conformité avec le premier protocole, avec le premier dispositif (2) ;
un fournisseur de service (302A, 302B) conçu pour fournir, en conformité avec un second protocole, le service, le second protocole étant différent du premier protocole ; et
une unité de relais (301) conçue pour, dès que le second dispositif de communication (30) reçoit la commande de demande, convertir, sur la base d'un en-tête de message prédéterminé et du premier en-tête de la commande de demande, la commande de demande en une trame qui est en conformité avec le second protocole, et fournir la trame au fournisseur de service (302A, 302B), et
**caractérisé en ce que** l'unité de relais (301) est conçue pour :
copier l'en-tête de message prédéterminé pour créer un en-tête temporaire, et
lire toutes les lignes dans l'ordre, à partir de la première ligne du premier en-tête, met à jour le contenu de l'en-tête temporaire sur la base du contenu des lignes lues, et ajoute l'en-tête temporaire mis à jour au corps de message extrait de la commande de demande pour convertir la commande de demande en la trame.

2. Système de communication (1) selon la revendication 1, dans lequel une communication entre le premier dispositif (2) et le second dispositif (3) est réalisée en conformité avec le protocole WebSocket.

3. Dispositif de gestion d'installations (3) permettant de gérer le fonctionnement d'au moins un dispositif d'installation (4) et de fournir un service prédéterminé à un dispositif de surveillance (2), le dispositif de gestion d'installations (3) comprenant :
un dispositif de communication (30) conçu pour communiquer, en conformité avec un premier protocole, avec le dispositif de surveillance (2) ;
un fournisseur de service (302A, 302B) conçu pour fournir, en conformité avec un second protocole, le service, le second protocole étant différent du premier protocole ; et
une unité de relais (301) conçue pour, dès que le dispositif communication (30) reçoit une commande de demande en provenance du dispositif de surveillance (2), convertir, sur la base d'un en-tête de message prédéterminé et d'un en-tête inclus dans la commande de demande et comprenant des paramètres pour recevoir le service, la commande de demande en une trame qui est en conformité avec le second protocole, et fournir la trame au fournisseur de service (302A, 302B), dans lequel :
**caractérisé en ce que** l'unité de relais (301) :
copie l'en-tête de message prédéterminé pour créer un en-tête temporaire, et
lit toutes les lignes dans l'ordre, à partir de la première ligne de l'en-tête, met jour le contenu de l'en-tête temporaire sur la base du contenu des lignes lues, et ajoute l'en-tête temporaire mis à jour à un corps de message extrait de la commande de demande pour convertir la commande de demande en la trame.

4. Procédé de communication comprenant de :
lorsqu'un premier dispositif qui est un dispositif de surveillance (2) demande à un second dispositif qui est un dispositif de gestion d'installations (3) de fournir un service prédéterminé, transmettre, en conformité avec un premier protocole, une commande de demande au second dispositif (3), la commande de demande incluant (i) un premier en-tête comprenant des paramètres pour recevoir le service et (ii) un corps de message indiquant un contenu de demande ; et
dès que le second dispositif (3) reçoit la commande de demande, convertir, sur la base d'un en-tête de message prédéterminé et du premier en-tête de la commande de demande, la commande de demande en une trame qui est en conformité avec un second protocole, et exécuter un traitement pour fournir le service sur la base de la trame convertie, le second protocole étant différent du premier protocole, **caractérisé en ce que** le second dispositif (3) :
copie l'en-tête de message prédéterminé pour créer un en-tête temporaire, et
lit toutes les lignes dans l'ordre, à partir de la première ligne du premier en-tête, met à jour le contenu de l'en-tête temporaire sur la base du contenu des lignes lues, et ajoute l'en-tête temporaire mis à jour au corps de message extrait de la commande de demande pour convertir la commande de demande en la trame.

5. Programme permettant, lorsqu'il est exécuté, de faire fonctionner un ordinateur destiné à gérer le fonctionnement d'au moins un dispositif d'installation (4) et à fournir un service prédéterminé à un dispositif de surveillance (2), en tant que :
dispositif de communication (30) conçu pour communiquer, en conformité avec un premier protocole, avec le dispositif de surveillance (2) ;
fournisseur de service (302A, 302B) conçu pour fournir, en conformité avec un second protocole, le service, le second protocole étant différent du premier protocole ;
unité de relais (301) conçue pour, dès que le dispositif communication (30) reçoit une commande de demande en provenance du dispositif de surveillance (2), convertir, sur la base d'un en-tête de message prédéterminé et d'un en-tête inclus dans la commande de demande et comprenant des paramètres pour recevoir le service, la commande de demande en une trame qui est en conformité avec le second protocole, et fournir la trame au fournisseur de service (302A, 302B), **caractérisé en ce que** le programme fait que l'unité de relais (301) :
copie l'en-tête de message prédéterminé pour créer un en-tête temporaire, et
lise toutes les lignes dans l'ordre, à partir de la première ligne de l'en-tête, mette à jour le contenu de l'en-tête temporaire sur la base du contenu des lignes lues, et ajoute l'en-tête temporaire mis à jour à un corps de message extrait de la commande de demande pour convertir la commande de demande en la trame.
